(19) Europäisches Patentamt
European Patent Office
Office européen des brevets

(11) Veröffentlichungsnummer: **0 135 811**
**B1**

(12) # EUROPÄISCHE PATENTSCHRIFT

(45) Veröffentlichungstag der Patentschrift: **14.12.88**

(51) Int. Cl.⁴: **C 08 G 59/62**, C 08 G 59/50, C 08 G 59/40, C 09 D 5/44

(21) Anmeldenummer: **84110070.4**

(22) Anmeldetag: **23.08.84**

(54) **Wasserdispergierbare Bindemittel für kationische Elektrotauchlace und Verfahren zu ihrer Herstellung.**

(30) Priorität: **03.09.83 DE 3331903**

(43) Veröffentlichungstag der Anmeldung: **03.04.85 Patentblatt 85/14**

(45) Bekanntmachung des Hinweises auf die Patenterteilung: **14.12.88 Patentblatt 88/50**

(84) Benannte Vertragsstaaten: **AT BE CH DE FR GB IT LI NL SE**

(56) Entgegenhaltungen:
**EP-A-0 027 641**
**EP-A-0 059 895**
**US-A-2 510 885**
**US-A-2 668 805**
**US-A-4 104 147**
**US-A-4 339 369**

**PATENT ABSTRACTS OF JAPAN, Band 8, Nr. 62 (C-215) 1499, 23. März 1984; & JP - A - 58 215 417 (NITSUSOU KENZAI KOGYO K.K.) 14.12.1983**

**Die Akte enthält technische Angaben, die nach dem Eingang der Anmeldung eingereicht wurden und die nicht in dieser Patentschrift enthalten sind.**

(73) Patentinhaber: **BASF Lacke + Farben Aktiengesellschaft, Max- Winkelmann- Strasse 80, D-4400 Münster (DE)**

(72) Erfinder: **Geist, Michael, Dr., Rubensstrasse 251, D-4400 Münster (DE)**
Erfinder: **Ott, Günther, Dr., von- Holte- Strasse 101a, D-4400 Munster- Wolbeck (DE)**
Erfinder: **Schön, Georg, Dr., Schillerstrasse 2, D-4416 Everswinkel (DE)**

**EP 0 135 811 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindung betrifft wasserdispergierbare Bindemittel für kationische Elektrotauchlacke auf der Basis von modifizierten Epoxidharzen.

Kationische wasserdispergierbare Kunstharze als Bindemittel für Elektrotauchlacke sind bekannt. So beschreibt z. B. die DE-OS-2 701 002 ein derartiges Harz, das ein Reaktionsprodukt von einem Polyepoxid mit einem Molekulargewicht von mindestens 350, einem sekundären Amin und einem organischen Polyol mit mindestens zwei alkoholischen primären Hydroxylgruppen ist. Die Harze entstehen durch Kettenverlängerung von hochmolekularen Polyepoxiden mit mindestens 2 Epoxidgruppen pro Molekül. Die Kettenverlängerung wird durch ein organisches Polyol erreicht und die Wasserdispergierbarkeit wird durch Anlagerung eines sekundären Amins erzielt.

In der DE-OS-2 701 002 wird darauf hingewiesen, daß die in jedem höhermolekularen Epoxidharz enthaltenen, sekundären Hydroxylgruppen bei der Kettenverlängerung in Konkurrenz zu den Hydroxylgruppen des Polyols treten können und dadurch einen undefinierten Molekülaufbau verursachen können. Im Extremfall kann es zum Gelieren des Reaktionsansatzes kommen.

Überraschenderweise wurde nun gefunden, daß Produkte mit deutlich verbesserten Eigenschaften erzielt werden, wenn das verwendete Bindemittel nicht mit einem aliphatischen Polyol kettenverlängert wird, sondern wenn hierzu Polyphenole eingesetzt werden.

Es ist somit das Verdienst der vorliegenden Erfindung eine Möglichkeit aufzuzeigen, durch eine gesteigerte Reaktivität und Selektivität des kettenverlängernden Agens einen eindeutigen Molekülaufbau zu gewährleisten.

Der Erfindung liegt also die Aufgabe zugrunde, wasserdispergierbare Bindemittel für kationische Elektrotauchlacke anzugeben, bei deren Verwendung verbesserte Beschichtungen durch einen gezielt durchgeführten Molekülaufbau erreicht werden. Durch diesen gezielten Aufbau werden auch die Elastizität und der Verlauf der Beschichtung verbessert.

Diese Aufgabe wird bei Bindemitteln der eingangs genannten Art erfindungsgemäß dadurch gelöst, daß sie Reaktionsprodukte von

A) Epoxidharzen mit einem Molekulargewicht von mindestens 350,

B) einem elastifizierten Polyphenol mit einem Molekulargewicht über 350 unter Addition an die Epoxidgruppen und weitere Umsetzung des Reaktionsprodukts mit

C) primären und/oder sekundären Aminen oder Ammoniumsalzen zur Erzielung der erforderlichen Wasserdispergierbarkeit.

Die neuen kationischen Kunstharze dieser Erfindung entstehen durch Kettenverlängerung von Polyepoxiden mit mindestens zwei Epoxygruppen pro Molekül. Die Kettenverlängerung wird durch organisches Polyphenol erreicht, das niedermolekular oder hochmolekular sein kann und mindestens zwei und bevorzugt ebenfalls zwei phenolische Hydroxylgruppen im Molekül enthält. Die Kettenverlängerung wird bevorzugt in Gegenwart eines Katalysators durchgeführt.

Es wurde festgestellt, daß durch die Kettenverlängerung der Polyepoxide die Durchschlagspannung der hergestellten Filme verbessert wird. Gleichzeitig wird auch das Fließvermögen und der Verlauf der Filme verbessert. In manchen Fällen ist auch eine Erhöhung der Flexibilität zu beobachten.

Diese Verbesserungen können durch die Verwendung der erfindungsgemäßen elastifizierten Polyphenole erreicht werden. Diese Polyphenole entsprechen folgender allgemeinen Formel:

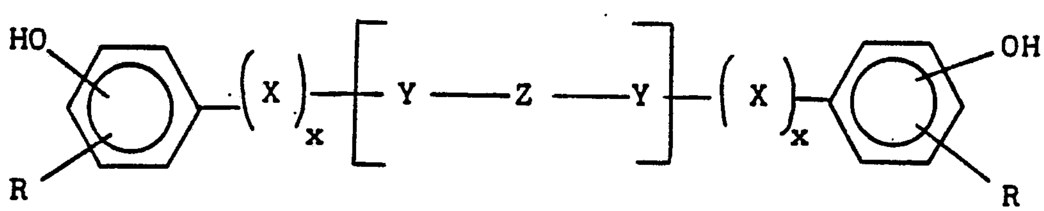

X = Alkylen, Arylen, Alkarylen,
O, O-Alkylen, O-Arylen, O-Alkarylen,
S, S-Alkylen, S-Arylen, S-Alkarylen,
CO, CO-Alkylen, CO-Arylen, CO-Alkarylen
$SO_2$, $SO_2$-Alkylen, $SO_2$-Arylen, $SO_2$-Alkarylen
NH, NH-Alkylen, NH-Arylen, NH-Alkarylen

x = 0 oder 1

$$Y = X, -\overset{O}{\overset{\|}{C}}-O-, -\overset{H}{\overset{|}{C}}=N-, -\overset{H}{\overset{|}{N}}-\overset{O}{\overset{\|}{C}}-$$

Z = Alkylen, Alkylenreste von Polyestern, Polyethern, Polyamiden, Polycarbonaten, Polyurethanen
R = H, $CH_3$, Alkyl, $-O-CH_3$, -O-Alkyl, $-NO_2$, $-NR'_2$, -NR'R'', -NHCOR''',

Insbesondere der Rest Z, der vorzugsweise höhermolekular ist, dient zur Elastifizierung.

Als Polyepoxide (Komponente A) können bei der vorliegenden Erfindung beliebige Materialien verwendet werden, die zwei oder mehr Epoxygruppen im Molekül enthalten. Bevorzugt sind Verbindungen mit zwei Epoxygruppen im Molekül. Die Polyepoxide haben ein relativ hohes Molekulargewicht von mindestens 350, bevorzugt 350 bis 2 000. Die Polyepoxide können zum Beispiel Polyglycidylether von Polyphenolen sein, wie Bisphenole, zum Beispiel Bisphenol A. Man kann diese Polyepoxide durch Veretherung eines Polyphenols mit einem Epihalohydrin in Gegenwart von Alkali herstellen. Beispiele für geeignete Phenolverbindungen sind Bis(4-hydroxyphenyl)-2,2-propan, 4,4'-Dihydroxybenzophenon, Bis(4-hydroxyphenyl)-1,1-ethan, Bis(4-hydroxyphenyl)-1,1-isobutan, 1,5 Dihydroxynaphthalin. In manchen Fällen ist es wünschenswert, Polyepoxide von höherem Molekulargewicht mit aromatischen Gruppen zu erhalten. Dies kann dadurch erreicht werden, daß man die vorhingenannten Diglycidylether mit einem Polyphenol wie Bisphenol A umsetzt und dann das erhaltene Produkt mit Epichlorhydrin unter Herstellung eines Polyglycidylethers weiter umsetzt. Eine andere geeignete Klasse von Polyepoxiden sind Polyglycidylether von phenolischen Novolakharzen.

Ebenfalls geeignet sind ähnliche Polyglycidylether von mehrwertigen Alkoholen, wie Ethylenglykol, Diethylenglykol, Triethylenglykol, 1,2-Propylenglykol, 1,4-Propylenglykol, 1,5-Pentandiol und Bis(4-hydroxycyclohexyl)-2,2-propan.

Es können auch Polyglycidylester von Polycarbonsäuren verwendet werden.

Die bei der Erfindung bevorzugten Polyepoxide sind die Polyglycidylether von Polyphenolen. Unter diesen sind es diejenigen mit Molekulargewichten von mindestens 350, bevorzugt im Bereich von 350 bis 2 000.

Die polymeren Polyepoxide können mit den elastifizierten Polyphenolen unter Kettenverlängerung und Vergrößerung des Molekulargewichtes umgesetzt werden. Das Kettenverlängerungsmittel wirkt als chemische Brücke zwischen den niedrigermolekularen Polymerketten und verbindet diese zu Produkten von höherem Molekulargewicht. Die Umsetzung tritt zwischen den phenolischen Hydroxylgruppen unter Öffnung des Epoxidringes und unter Bildung von Etherbindungen und einer sekundären Hydroxylgruppe ein.

Die Kettenverlängerung wird durch Mischen des elastifizierten Polyphenols und Umsetzung bei einer Temperatur von etwa 120 bis 180°C in Gegenwart eines Katalysators, wie eines tertiären Amins, in vorteilhafter Weise erreicht. Ein inertes Lösungsmittel kann bei der Umsetzung zugegeben sein. Beispiele von geeigneten tertiären Aminen sind Benzyldimethylamin, Dimethylcyclohexylamin, Dimethylethanolamin und Triethylamin. Außer Aminen können andere Katalysatoren verwendet werden.

Das Kettenverlängerungsmittel (Komponente B) wird vorteilhafterweise in einer solchen Menge eingesetzt, daß der Anteil der (Komponente B) 10 - 50 Gew.-%, bezogen auf das gesamte Bindemittel beträgt.

Die Kettenverlängerer (Komponente B) sind elastifizierte Polyphenole, die mindestens zwei und bevorzugt nur zwei phenolische Hydroxylgruppen enthalten. Mischungen von Polyphenolen können ebenfalls verwendet werden.

Die Polyphenole können entweder ein niedriges oder ein hohes Molekulargewicht besitzen und haben im allgemeinen Molekulargewichte von etwa 350 bis 3 000, bevorzugt etwa 500 bis 1 000.

Die Komponente B kann zum Beispiel vorteilhaft auf folgende Weise hergestellt werden: Ein Mol eines höhermolekularen Diols, zum Beispiel eines Polyesterdiols, eines Polycaprolactondiols, eines Polyetherdiols, eines Polycarbonatdiols oder dergleichen, wird mit zwei Molen einer Hydroxyphenylcarbonsäure verestert oder mit zwei Molen eines Hydroxyphenylcarbonsäureesters umgesetzt. Geeignehe Hydroxycarbonsäuren sind p-Hydroxybenzoesäure, p-Hydroxyphenylessigsäure und 3-(4-Hydroxyphenyl-)propionsäure oder deren Ester. Wird das Anhängen der Hydroxyphenylgruppe durch Umesterung durchgeführt, kann man auch eine basische Umesterung durchführen und hierzu die Alkaliphenolate der entsprechenden Hydroxyphenylcarbonsäureesteer einsetzen. Nach Reaktionsende muß das Produkt sauer aufgearbeitet werden, um das gewünschte Polyphenol zu erhalten.

Zur direkten Veresterung kann zum Beispiel auch N-(4-Hydroxyphenyl-)glycin eingesetzt werden.

In einer weiteren Variante können beliebige, saure Polyester mit p-Hydroxyanilin zu den erwünschten Polyphenolen umgesetzt werden.

In einer anderen vorteilhaften Ausgestaltung werden Polyetherdiamine oder ähnliche Polyamine mit zum Beispiel 4-Hydroxy-3-methoxybenzaldehyd zu den Polyphenolen umgesetzt.

Das für die Umsetzung mit der Epoxidverbindung als Komponente C verwendete Amin kann primär, sekundär oder tertiär sein, wobei sekundäre Amine sich besonders gut eignen. Primäre und sekundäre Amine können direkt an den Epoxidring angelagert werden, tertiäre nur in Form ihrer Ammoniumsalze oder über eine weitere funktionelle Gruppe im Molekül. Bevorzugt sollte das Amin eine in Wasser lösliche Verbindung sein. Beispiele solcher Amine sind Mono- und Dialkylamine, wie Methylamin, Ethylamin, Propylamin, Butylamin, Dimethylamin, Diethylamin, Dipropylamin, Methylbutylamin und dergleichen. Geeignet sind ebenfalls

Alkanolamine wie zum Beispiel Methylethanolamin, Diethanolamin und dergleichen. Ferner sind Dialkylaminoalkylamine wie zum Beispiel Dimethylaminoethylamin, Diethylaminopropylamin und dergleichen geeignet.

In den meisten Fällen werden niedermolekulare Amine verwendet, doch ist es auch möglich, höhermolekulare Amine anzuwenden, insbesondere dann, wenn die Absicht besteht, die Flexibilität des Harzes durch den Einbau solcher Amine zu erhöhen. In ähnlicher Weise kann man auch Mischungen aus niedermolekularen und höhermolekularen Aminen zur Modifizierung der Harzeigenschaften verwenden.

Polyamine mit primären und sekundären Aminogruppen können in Form ihrer Ketimine mit den Epoxidgruppen umgesetzt werden. Die Ketimine werden aus den Polyaminen in bekannter Weise hergestellt.

Die Amine können auch noch andere Gruppen enthalten, doch sollen diese die Umsetzung des Amins mit der Epoxygruppe nicht stören und auch nicht zu einer Gelierung der Reaktionsmischung führen.

Die Umsetzung des Amins mit der epoxygruppenhaltigen Verbindung tritt häufig schon beim Vermischen dieser Materialien ein. Es kann aber gegebenenfalls eine Erwärmung auf mäßig erhöhte Temperaturen wünschenswert sein, z. B. auf 50 bis 150°C, doch sind Umsetzungen auch bei niedrigeren und höheren Temperaturen möglich. Häufig ist es vorteilhaft, zur Beendigung der Umsetzung die Temperatur gegen das Ende der Reaktion mindestens geringfügig für eine ausreichende Zeit zu erhöhen, um eine vollständige Umsetzung sicherzustellen.

Für die Umsetzung mit der epoxyhaltigen Verbindung sollte mindestens eine solche Menge an Amin verwendet werden, daß das Harz einen kationischen Charakter annimmt, d.h. daß es unter dem Einfluß einer Spannung in dem Beschichtungsbad zu der Kathode wandert, wenn es durch Zugabe einer Säure löslich gemacht worden ist. Es können im wesentlichen alle Epoxygruppen des Harzes mit einem Amin umgesetzt werden. Es ist aber auch möglich, überschüssige Epoxygruppen in dem Harz zu belassen, die bei der Berührung mit Wasser unter Bildung von Hydroxylgruppen hydrolysieren.

Eine weitere Möglichkeit, die erforderliche Wasserdispergierbarkeit zu erzielen, besteht darin, als Komponente D Mannich-Basen, d.h. Umsetzungsprodukte geeigneter, zur Reaktion mit einem Epoxidring geeignete Gruppen tragender Phenole mit Formaldehyd und einem sekundären Amin, zu verwenden. Hierdurch wird das Bindemittel gleichzeitig selbstvernetzbar.

Des weiteren können die Amine über Tscherniac-Einhorn-Michael-Addukte an die Epoxidharze angelagert werden. Diese Addukte werden auf folgendem Syntheseweg hergestellt. Zunächst werden Phenole mit Methylol(meth)acrylamid zum Tscherniac-Einhorn-Zwischenprodukt umgesetzt, danach werden die Doppelbindungen mit Aminen belegt. Die Endprodukte können über die Phenolgruppe mit den Epoxidgruppen des Bindemittels umgesetzt werden.

Anstelle der genannten Amine oder zusammen mit diesen können auch das Salz eines Amins verwendet werden. Als Salz eines Amins kann das Salz eines tertiären Amins verwendet werden. Zur Neutralisation der Amine geeignete Säuren, die bei der Erfindung verwendet werden können, schließen Borsäure oder andere Säuren mit einer größeren Dissoziationskonstante als Borsäure ein, bevorzugt organische Säuren mit einer Dissoziationskonstante von größer als etwa $1 \times 10^{-5}$. Die bevorzugte Säure ist Essigsäure. Beispiele von anderen Säuren sind Ameisensäure, Milchsäure, Propionsäure, Buttersäure, Salzsäure, Phosphorsäure, Schwefelsäure und Kohlensäure.

Der Aminanteil des Amin-Säuresalzes ist ein Amin, das unsubstituiert oder substituiert wie im Falle des Hydroxylamins sein kann, wobei diese Substituenten die Umsetzung des Amin-Säuresalzes mit dem Polyepoxid nicht stören sollen und die Reaktionsmischung nicht gelieren sollen. Bevorzugte Amine sind tertiäre Amine, wie Dimethylethanolamin, Triethylamin, Trimethylamin, Triisopropylamin und dergleichen. Beispiele von anderen geeigneten Aminen sind in der US-PS-3 839 252 in Spalte 5, Zeile 3 bis Spalte 7, Zeile 42 angegeben.

Die Amin-Säuresalzmischung wird durch Umsetzung des Amins mit der Säure in bekannter Weise erhalten. Es können auch Amin-Säuremischungen verwendet werden, obwohl sie in der Regel unter Bildung des Säuresalzes reagieren.

Die Reaktionstemperatur für die Umsetzung der Amin-Säuresalze mit den Polyepoxiden kann zwischen der niedrigsten Temperatur, bei der die Umsetzung mit einer nennenswerten Geschwindigkeit verläuft, z. B. Raumtemperatur oder in der Regel etwas höher als Raumtemperatur, bis zu einer maximalen Temperatur zwischen etwa 10 und 100°C variiert werden. Ein Lösungsmittel ist bei der Umsetzung nicht erforderlich, obwohl es häufig zugegeben wird, um die Reaktion besser steuern zu können. Als Lösungsmittel kommen aromatische Kohlenwasserstoffe oder Monoalkylether von Ethylenglykol in Betracht.

Die speziellen Ausgangsstoffe, Mengenanteile und Reaktionsbedingungen werden in Übereinstimmung mit den gut bekannten Erfahrungen so ausgewählt, daß eine Gelierung des Produktes während der Reaktion vermieden wird. So werden z. B. übermäßig aggressive Reaktionsbedingungen nicht verwendet. In ähnlicher Weise werden Ausgangsstoffe mit reaktionsfähigen Substituenten, die sich mit den Epoxyverbindungen umsetzen können, nicht benutzt, da sie die Reaktion nachteilig beeinflussen können.

Um unter Verwendung der erfindungsgemäßen Bindemittel hochbeständige Überzüge zu erhalten, ist es vorteilhaft, dem Elektrotauchlack ein Vernetzungsmittel zuzusetzen, das bei erhöhten Temperaturen die Vernetzung des Bindemittels bewirkt, oder das Bindemittel so zu modifizieren, daß es reaktive Gruppen enthält, die bei erhöhten Temperaturen eine Selbstvernetzung bewirken. Ein selbstvernetzendes System kann vorteilhaft dadurch erhalten werden, daß das Bindemittel mit einem teilblockierten Polyisocyanat, das im Durchschnitt eine freie Isocyanatgruppe pro Molekül besitzt und dessen blockierte Isocyanatgruppen bei

Raumtemperatur beständig sind und bei erhöhten Temperaturen entblockt werden und mit den durch die Öffnung der Epoxidringe entstandenen Hydroxylgruppen unter Urethanbildung reagieren. Das Bindemittel kann durch den Einsatz der bereits beschriebenen Mannich-Basen als Komponente D selbstvernetzbar sein.

Häufig angewandte Methoden zur Vernetzung von Bindemitteln sind z. B. in folgenden Offenlegungsschriften publiziert: DE-OS-2 057 799, europäische Patentanmeldungen 12 463 und 4090 und DE-OS-2 752 256.

Wenn Vernetzungsmittel benutzt werden, machen sie in der Regel etwa 5 bis etwa 60 Gewichts-% des Bindemittels aus.

Bevorzugt sind etwa 20 bis etwa 40 Gewichts-% des Bindemittels.

Beispiele von geeigneten Aminoplastvernetzungsmitteln sind der Hexamethylether von Hexamethylolmelamin, der Triethyltrimethylether von Hexamethylolmelamin, der Hexabutylether von Hexamethylolmelamin und der Hexamethylether von Hexamethylolmelamin und polymere butylierte Melaminformaldehydharze.

Man kann Harnstoff-Aldehydvernetzungsmittel in bekannter Weise herstellen, indem man Harnstoff und einen Aldchyd bis zur Resolstufe umsetzt und das Umsetzungsprodukt mit einem Alkohol unter sauren Bedingungen alkyliert, wobei man ein alkyliertes Harnstoffaldehydharz erhält. Ein Beispiel von einem geeigneten Vernetzungsmittel auf Basis eines Harnstoffaldehydharzes ist ein butyliertes Harnstofformaldehydharz.

Als Vernetzungsmittel können auch blockierte Polyisocyanate eingesetzt werden. Es können bei der Erfindung beliebige Polyisocyanate benutzt werden, bei denen die Isocyanatgruppen mit einer Verbindung umgesetzt worden sind, so daß das gebildete blockierte Polyisocyanat gegenüber Hydroxylgruppen bei Raumtemperatur beständig ist, bei erhöhten Temperaturen, in der Regel im Bereich von etwa 90 bis etwa 300°C, aber reagiert. Bei der Herstellung der blockierten Polyisocyanate können beliebige, für die Vernetzung geeignete organische Polyisocyanate, verwendet werden.

Die bei der Erfindung als Vernetzungsmittel in Betracht kommenden organischen Polyisocyanate können auch Präpolymere sein, die sich beispielsweise von einem Polyol einschließlich eines Polyetherpolyols oder eines Polyesterpolyols ableiten.

Für die Blockierung der Polyisocyanate können beliebige geeignete aliphatische, cycloaliphatische oder aromatische Alkylmonoalkohole verwendet werden. Andere geeignete Blockierungsmittel sind Hydroxylamine oder sekundäre Amine.

Die blockierten Polyisocyanate werden hergestellt, indem man eine ausreichende Menge des Blockierungsmittels mit dem organischen Polyisocyanat umsetzt, so daß keine freien Isocyanatgruppen mehr vorhanden sind. Die Umsetzung zwischen dem organischen Polyisocyanat und dem Blockierungsmittel ist exotherm. Deshalb werden das Polyisocyanat und das Blockierungsmittel bevorzugt bei einer Temperatur, die nicht höher ist als 80°C, insbesondere niedriger als 50°C ist, gemischt, um dem exothermen Effekt entgegenzuwirken.

Die Erfindung betrifft auch ein Verfahren zur Herstellunq eines Bindemittels für kationische Elektrotauchlacke durch Umsetzung von

A) Epoxidharzen mit einem Molekulargewicht von mindestens 350 mit

B) einem elastifizierten Polyphenol mit einem Molekulargewicht über 350 unter Addition an die Epoxidgruppen und weitere Umsetzung des Reaktionsproduktes mit

C) primären und/oder sekundären Aminen oder Ammoniumsalzen zur Erzielung der erforderlichen Wasserdispergierbarkeit, dadurch gekennzeichnet, daß als Komponente B ein elastifiziertes Polyphenol eingesetzt wird, das der obenerläuterten allgemeinen Formel

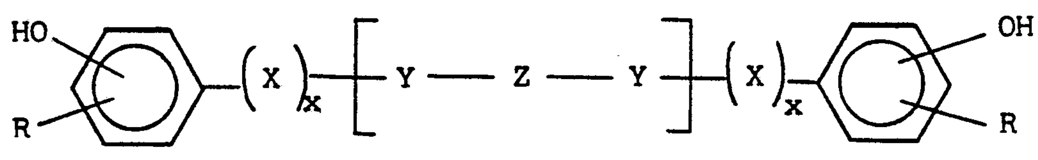

entspricht.

Die Erfindung betrifft ferner die Verwendung der Bindemittel für Elektrotauchbäder.

Um unter Verwendung der erfindungsgemäßen Bindemittel hochbeständige Überzüge zu erhalten, ist es vorteilhaft, dem Elektrotauchlack ein Vernetzungsmittel zuzusetzen, das bei erhöhten Temperaturen die Vernetzung des Bindemittels bewirkt, oder das Bindemittel so zu modifizieren, daß es reaktive Gruppen enthält, die bei erhöhten Temperaturen eine Selbstvernetzung bewirken. Ein selbstvernetzendes System kam vorteilhaft dadurch erhalten werden, daß das Bindemittel mit einem teilblockierten Polyisocyanat, das im Durchschnitt eine freie Isocyanatgruppe pro Molekül besitzt und dessen blockierte Isocyanatgruppen bei Raumtemperatur beständig sind und bei erhöhten Temperaturen entblockt werden und mit den durch die Öffnung der Epoxidringe entstandenen Hydroxylgruppen unter Urethanbildung reagieren.

Um dem Kunstharz für die elektrische Abscheidung einen ausreichenden kationischen Charakter zu

verleihen, wird im allgemeinen der neutralisierbare Stickstoff pro Gramm der gesamten Harzfeststoffe bevorzugt zwischen 0,3 und 3 Milliäquivalenten gehalten.

Wässrige Dispersionen der erfindungsgemäßen Kunstharzprodukte sind als Überzugsmassen sehr geeignet, insbesondere für die Herstellung von Überzügen durch elektrische Abscheidung. Die Überzugsmassen können aber auch in konventioneller Art und Weise auf die Substrate aufgebracht werden. Für die Dispergierung in Wasser werden die harzartigen Produkte neutralisiert, um kationische Gruppen zu bilden, z. B. Salze von tertiären Aminen und, im Falle von hydrolisierten ketiminhaltigen Harzen, Salze von primären Aminen.

Die Neutralisierung der Produkte wird durch Umsetzung eines Teils oder aller Aminogruppen durch eine wasserlösliche Säure, z. B. Ameisensäure, Essigsäure oder Phosphorsäure, erreicht. Der Grad der Neutralisation hängt von dem besonderen Harz ab und es ist im allgemeinen ausreichend, daß nur soviel Säure zugesetzt wird, daß das Harz in Wasser dispergierbar ist.

Die Konzentration der harzartigen Produkte in dem wässrigen Medium hängt von den zu verwendenden Verfahrensparametern ab und ist in der Regel nicht kritisch. Üblicherweise bildet Wasser den Hauptanteil der wässrigen Dispersion. Die wässrige Dispersion kann z. B. etwa 5 bis etwa 50 Gew.-% Harzfeststoffe enthalten.

Außer Wasser kann das wässrige Medium ein koaleszierendes Lösungsmittel enthalten. Durch die Mitverwendung eines koaleszierenden Lösungsmittels wird in manchen Fällen ein besseres Aussehen des Films erreicht. Solche Lösungsmittel schließen Kohlenwasserstoffe, Alkohole, Ester, Ether und Ketone ein. Die bevorzugten koaleszierenden Lösungsmittel sind Monoalkohole, Glykole und Polyole und auch Ketone und Etheralkohole. Spezifische koaleszierende Lösungsmittel sind Isopropanol, Butanol, Isophoron, 4-Methoxymethylpentanon-2, Ethylen- und Propylenglykol, Monoethyl-, Monobutyl- und Monohexylether von Ethylenglykol und 2-Ethylhexanol. Die Menge des koaleszierenden Lösungsmittels ist nicht kritisch und im allgemeinen werden zwischen etwa 0,1 und 40 Gew.-%, bevorzugt etwa 0,5 bis 25 Gew.-%, bezogen auf das Gesamtgewicht des wässrigen Mediums, verwendet.

In den meisten Fällen enthält die wässrige Dispersion auch Pigmente und andere übliche Zusätze, wie oberflächenaktive Mittel. Es können die üblichen Pigmente verwendet werden, wie Eisenoxide, Bleioxide, Strontiumchromat, Ruß, Kohlenstaub, Titandioxid, Talkum, Bariumsulfat und farbige Pigmente wie Cadmiumgelb, Cadmium-rot, Chrom-gelb und dergleichen. Der Pigmentgehalt der Dispersion wird in der Regel als Verhältnis von Pigment zu Harz ausgedrückt. Bei der Erfindung liegt das Pigment zu Harzverhältnis in der Regel im Bereich von 0,01 bis 5 : 1. Andere übliche Zusatzstoffe können in der Dispersion in der Regel in Mengen von etwa 0,01 bis 3 Gew.-%, bezogen auf das Gesamtgewicht der Harzfeststoffe, vorhanden sein.

Bei der elektrischen Abscheidung der erfindungsgemäßen Kunstharze werden diese in wässriger Dispersion im Kontakt mit einer elektrisch leitenden Anode und einer elektrisch leitenden Kathode gebracht, wobei die Kathode die zu überziehende Oberfläche ist. Während der Berührung mit der wässrigen Dispersion wird beim Anlegen einer Spannung zwischen den Elektroden ein haftender Film der Überzugsmasse auf der Kathode abgeschieden.

Die Bedingungen, unter denen die elektrische Abscheidung erfolgt, sind im allgemeinen denjenigen ähnlich, die zur elektrischen Abscheidung von anderen Überzugsmassen verwendet werden. Üblicherweise liegt die Spannung zwischen etwa 50 und 500 Volt.

Es ist vorteilhaft, daß die Dispersion während der elektrischen Abscheidung ein pH zwischen 3 und etwa 9 hat.

Die elektrische Abscheidung der erfindungsgemäßen Kunstharze kann auf beliebigen leitfähigen Substraten, insbesondere Metallen wie Stahl, Aluminium, Kupfer oder Magnesium erfolgen. Nach der elektrischen Abscheidung kann der Überzug durch Erwärmen auf erhöhte Temperaturen gehärtet werden. Hierfür kommen in der Regel Temperaturen von 90 bis 200°C und Zeitraume von 1 bis 30 Minuten in Betracht.

Um eine rasche und vollständige Härtung sicherzustellen, ist es manchmal vorteilhaft, einen Katalysator in der Überzugsmasse zu haben. Die Menge des verwendeten Katalysators sollte ausreichend sein, um die Härtung des abgelagerten Filmes zu beschleunigen. Typische Mengen sind Mengen von etwa 0,05 Prozent bis etwa 4 Prozent, bezogen auf das Gewicht der gesamten Harzfeststoffe. In der Regel werden etwa 2 Gew.-% eines solchen Katalysators verwendet. Wenn jedoch die Härtungstemperaturen hoch genug sind, kann auf den Katalysator verzichtet werden.

Die Erfindung betrifft also auch ein Verfahren zum elektrophoretischen Beschichten eines elektrisch leitenden als Kathode geschalteten Substrats aus einem wässrigen Bad auf Basis mindestens teilweise mit Säuren neutralisierter kationischer Bindemittel, wobei die Bindemittel durch Umsetzung selbstvernetzbar gemacht worden sind oder das Bad ein zusätzliches Vernetzungsmittel enthält, dadurch gekennzeichnet, daß die Bindemittel Reaktionsprodukte von

A) Epoxidharzen mit einem Molekulargewicht von mindestens 350

B) einem elastifizierten Polyphenol mit einem Molekulargewicht über 350 unter Addition an die Epoxidgruppen und weitere Umsetzung des Reaktionsproduktes mit

C) primären und/oder sekundären Aminen oder Ammoniumsalzen zur Erzielung der erforderlichen Wasserdispergierbarkeit

dadurch gekennzeichnet, daß als (Komponente B) ein elastifiziertes Polyphenol eingesetzt wird, das der obenerläuterten Formel

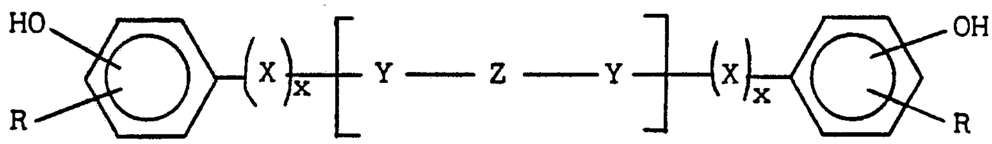

entspricht.

Darstellung eines Vernetzungsmittels I

Ein Reaktor, der mit einer Heizvorrichtung, einem Kühler, einem Rührer, einem Thermometer, einer Ausgangsleitung, die zu einer Waschvorrichtung führt, und einer Einrichtung zum Einleiten von Stickstoff ausgerüstet wird, wird mit 12 280 Teilen Toluylendiisocyanat (Mischung aus etwa 80 % 2,4-Toluylendiisocyanat und etwa 20 % 2,6-Toluylendiisocyanat) beschickt. Es wird Stickstoff eingeleitet und der Kühler wird eingeschaltet. Im Verlauf von 5 Stunden werden 5 550,5 Teile 2-ethylhexanol allmählich zugegeben, wobei die Temperatur allmählich auf 50°C steigt. Während die Temperatur von 50°C aufrecht erhalten wird, werden weitere 3 649,5 Teile 2-Ethylhexanol im Verlauf von 4 Stunden zugegeben. Die Reaktionsmischung wird 75 Minuten bei 50°C gehalten, dann wird der Kühler abgeschaltet und es werden 3,6 Teile Dibutylzinndilaurat zugegeben. Die Heizvorrichtung wird angeschaltet und die Reaktionsmischung wird im Verlauf von 45 Minuten auf 65°C erwärmt. Im Verlauf von zwei Stunden und 50 Minuten werden 3 184 Teile 1,1,1-Trimethylolpropan zugegeben, wobei die Temperatur von 65 auf 120°C steigt. Die Reaktionsmischung wird bei dieser Temperatur 90 Minuten gehalten, dann werden 10 560 Teile 2-Ethoxiethanol zugegeben. Das entstandene Produkt ist eine Lösung eines Polyurethanvernetzungsmittels.

Darstellung eines Vernetzungsmittels II

2 340 g Glycidylester der 2-Methyl-2-Ethylheptansäure werden mit 2 073 g Trimellithsäureanhydrid in einem Reaktionsgefäß auf 130°C erhitzt. Hierbei springt die stark exotherme Reaktion an. Durch externe Kühlung wird die Reaktion bei 150°C gehalten, bis eine Säurezahl von 183 erreicht ist. Danach kühlt man auf 90°C ab und setzt 1 450 g MIBK* zu. Anschließend tropft man 835 g Propylenoxid langsam zu. Bei einer Säurezahl 2 wird die Reaktion abgebrochen. Der Festkörper der Harzlösung wird mit weiterem MIBK* auf 70 % eingestellt.
*MIBK = Methylisbutylketon

Darstellung eines elastifizierten Polyphenols I

In einem geeigneten Reaktionsgefäß mit Schutzgaseinleitung werden 500 g eines Polycaprolactondiols (OH-Zahl 210,9) und 286 g p-Hydroxybenzoesäuremethylester vorgelegt. Die Mischung wird auf 140°C aufgeheizt und homogenisiert. Danach gibt man 3,9 g Zinnoctoat zu und erhitzt auf 180°C. Hierbei beginnt die Methanolabspaltung. Nach Ende der Abspaltung läßt man noch eine Stunde bei 180°C rühren und kühlt danach das Produkt ab.

Darstellung eines elastifizierten Polyphenols II

Man verfährt wie bei der Darstellung des Polyphenols I, jedoch werden an Stelle des Polycaprolactondiols (OH-Zahl 152) 695 g eines Polytetrahydrofurandiols eingesetzt.

Darstellung eines elastifizierten Polyphenols III

In einem geeigneten Reaktor werden 550 Adipinsäure, 262 g Neopentylglykol, 49 g Xylol und 0,8 g Dibutylzinnoxid vorgelegt und erhitzt. Bei 132°C beginnt die Wasserabscheidung. Man steigert die Temperatur langsam auf 186°C und hält sie solange, bis die entsprechende Wassermenge ausgekreist ist (90 g). Danach kühlt man auf 100°C und gibt 274 g p-Aminophenol zu. Dann steigert man die Temperatur erneut, bei 162°C setzt eine erneute Wasserabspaltung ein. Man steigert die Temperatur langsam auf 185°C und hält sie konstant, bis 45 g Wasser abgespalten sind. Danach destilliert man das Xylol ab. Zur Einbringung des elastifizierten Bindemittels in die Harze wird das Polyphenol auf 100°C vorgewärmt.

Darstellung eines Bindemittels I

In einem geeigneten Reaktionsgefäß werden 918 g eines handelsüblichen Epoxidharzes auf Basis Bisphenol A (Epoxidäquivalentgewicht 188), 278 g des Polyphenols I und 79 g Xylol vorgelegt und erhitzt. Bei 141°C werden 2,2 ml Dimethylbenzylamin zugesetzt. Durch exotherme Reaktion steigt die Temperatur weiter an (165°C). Man hält die Temperatur bis ein Epoxidäquivalentgewicht von 490 erreicht ist. Dann gibt man 332 g Bisphenol A zu und setzt weitere 2,2 ml Dimethylbenzylamin nach. Man führt die Anlagerung bei 160°C durch, bis ein

Epoxidäquivalentgewicht von 1 240 erreicht ist. Dann gibt man 1 178 g des Vernetzungsmittels I, 100 g eines Ketimins und 72 g Methylethanolamin zu. Man führt die Reaktion eine Stunde bei 115 °C weiter und fügt danach 169 g Hexylglykol zu und mischt 15 Minuten unter. Inzwischen bereitet man aus 1 401 g entionisiertem Wasser, 27,4 g Eisessig und 30,7 g einer Entschäumerlösung ein Dispergierbad vor. Hierin werden 2 500 g der obenbeschriebenen Harzlösung dispergiert. Nach einer Stunde fügt man 1 702 g entionisiertes Wasser hinzu und mischt 30 Minuten unter. Anschließend filtriert man die Dispersion. Sie weist folgende Kennwerte auf:

| | |
|---|---|
| Festkörper 30', 150°C | 33,5 % |
| pH-Wert | 7,1 |
| MEQ-Säure | 0,2841 |
| MEQ-Base | 0,6040 |

Darstellung eines Bindemittels II

Es wird entsprechend der Vorschrift für das Bindemittel I gearbeitet, jedoch wird hierbei das elastifizierte Polyphenol II und das Vernetzungsmittel II eingesetzt.

| | | |
|---|---|---|
| Epoxidharz (EEW 188) | 813 | Teile |
| Polyphenol II | 485 | Teile |
| Xylol | 70 | Teile |
| Dimethylbenzylamin | 1,7 | Teile |
| Bisphenol A | 247 | Teile |
| Dimethylbenzylamin | 3,5 | Teile |
| Vernetzungsmittel II | 1178 | Teile |
| Ketimin | 88 | Teile |
| Methylethanolamin | 64 | Teile |
| Hexylglykol | 137 | Teile |
| Harzlösung | 2500 | Teile |
| entionisiertes Wasser | 1452 | Teile |
| Eisessig | 27 | Teile |
| Emulgatorlösung | 31 | Teile |
| entionisiertes Wasser | 1723 | Teile |

Die Dispersion wird nach ihrer Herstellung im Vakuum auf 60°C erhitzt. Hierbei werden 305 g organische Phase abgezogen. Nach dem Abkühlen wird die Dispersion filtriert.
Sie weist folgende Kennwerte auf:

| | |
|---|---|
| Festkörper 30', 150°C | 37,4 % |
| pH-Wert | 6,9 |
| MEQ-Säure | 0,3045 |
| MEQ-Base | 0,5821 |

Darstellung eines Bindemittels III

Es wird entsprechend der Vorschrift für das Bindemittel I gearbeitet, jedoch wird hierbei das elastifizierte Polyphenol III eingesetzt.

| | | |
|---|---|---|
| Epoxidharz (EEW 188) | 855 | Teile |
| Polyphenol III | 425 | Teile |
| Xylol | 74 | Teile |
| Dimethylbenzylamin | 1,8 | Teile |
| Bisphenol A | 259 | Teile |
| Dimethylbenzylamin | 3,6 | Teile |
| Vernetzungsmittel I | 1178 | Teile |
| Ketimin | 93 | Teile |
| Methylethanolamin | 67 | Teile |
| Hexylglykol | 138 | Teile |
| Harzlösung | 2500 | Teile |
| entionisiertes Wasser | 1444 | Teile |
| Eisessig | 28 | Teile |
| Emulgatorlösung | 1719 | Teile |

Kennwerte der Dispersion III

| | |
|---|---|
| Festkörper 30', 150°C | 35,6 % |
| pH-Wert | 7,2 |
| MEQ-Säure | 0,2989 |
| MEQ-Base | 0,6103 |

Darstellung einer grauen Pigmentpaste

Zu 953 Teilen eines handelsüblichen Epoxidharzes auf Basis Bisphenol A mit einem Epoxidäquivalentgewicht von 890 werden 800 Teile Butylglykol gegeben. Die Mischung wird auf 80°C erhitzt. In die Harzlösung werden dann 221 Teile eines Umsetzungsproduktes aus 101 Teilen Diethanolamin und 120 Teilen 80 %-iger wässriger Milchsäure gegeben. Man führt die Reaktion bei 80°C durch bis die Säurezahl unter 1 gefallen ist.

1 800 Teile dieses Produkts werden mit 2 447 Teilen entionisiertem Wasser vorgelegt und mit 2 460 Teilen $TiO_2$, 590 Teilen eines Extenders auf Basis Aluminiumsilikat, 135 Teilen Bleisilikat und 37 Teilen Ruß vermengt. Diese Mischung wird in einem Mahlaggregat auf eine Hegmann-Feinheit von 5 bis 7 zerkleinert. Danach gibt man 1 255 Teile entionisiertes Wasser zu, um die gewünschte Pastenkonsistenz zu erreichen. Diese graue Paste ist sehr lagerstabil.

Zubereitung der Elektrotauchbäder und Abscheidung von Lackfilmen

Jeweils 2 000 Gew.-Teile der obenbeschriebenen Bindemitteldispersionen werden mit 775 Gew.-Teilen der grauen Pigmentpaste vermischt. Der Badfestkörper wird mit entionisiertem Wasser auf 20 % (150°C, 30') eingestellt. Man läßt dann das Bad 3 Tage unter Rühren altern. Die Abscheidung der Lackfilme erfolgt während 2 Minuten auf zinkphosphatiertem Blech. Die Badtemperatur beträgt hierbei 27°C. Die abgeschiedenen Filme werden bei 180°C während 20 Minuten eingebrannt.

| | | Dispersion I | Dispersion II | Dispersion III |
|---|---|---|---|---|
| Abscheidespannung | V | 310 | 300 | 350 |
| Filmdicke | µm | 19 | 17 | 21 |
| Gitterschnitt * | | 0 | 0 | 0 |
| Haftung | | sehr gut | gut | sehr gut |
| Verlauf * | | 1 | 1,5 | 1 |
| Erichsen-Tiefung | mm | 8,3 | 1,5 | 8,9 |
| Vernetzung ** | | i.O. | i.O. | i.O. |

* 0 bester Wert, 5 schlechtester Wert
** 20 Doppelhübe MIBK

**Patentansprüche**

1. Wasserdispergierbare Bindemittel für kationische Elektrotauchlacke auf der Basis von modifizierten Epoxidharzen, dadurch gekennzeichnet, daß sie hergestellt worden sind durch Reaktion von

A) Epoxidharzen mit einem Molekulargewicht von mindestens 350 mit

B) elastifizierten Polyphenolen mit einem Molekulargewicht über 350, die der folgenden allgemeinen Formel entsprechen

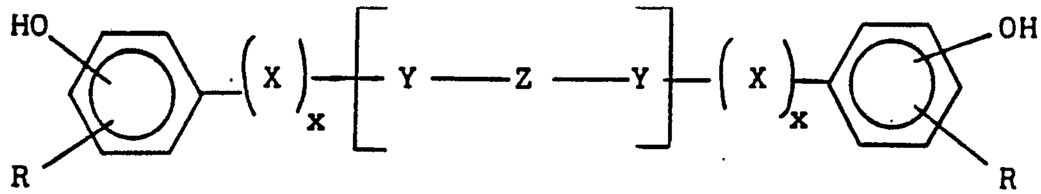

X = Alkylen, Arylen, Alkarylen
O, O-Alkylen, O-Arylen, O-Alkarylen
S, S-Alkylen, S-Arylen, S-Alkarylen,
CO, CO-Alkylen, CO-Arylen, CO-Alkarylen
$SO_2$, $SO_2$-Alkylen, $SO_2$-Arylen, $SO_2$-Alkarylen
NH, NH-Alkylen, NH-Arylen, NH-Alkarylen

x = 0 oder 1

Y = X,

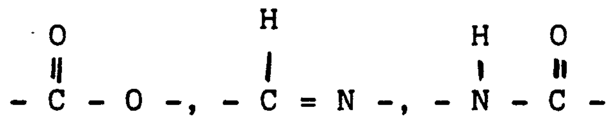

Z = Alkylen, Alkylen auf Basis von Polyestern, Polyethern, Polyamiden, Polycarbonaten, Polyurethanen

R = H, $CH_3$, Alkyl-, -O-$CH_3$, -O-Alkyl, -$NO_2$, - $NR'_2$, -NR'R'', -NHCOR'''

unter Addition an die Epoxidgruppen und weitere Umsetzung des Reaktionsproduktes aus A) und B) mit

C) primären und/oder sekundären Aminen oder Ammoniumsalzen zur Erzielung der erforderlichen Wasserdispergierbarkeit.

2. Bindemittel nach Anspruch 1, dadurch gekennzeichnet, daß die Komponente A ein Epoxidharz auf Basis Bisphenol A ist.

3. Bindemittel nach Anspruch 1, dadurch gekennzeichnet, daß die Komponente A ein Polyglycidylester ist.

4. Bindemittel nach einem der Ansprüche 1 bis 3, dadurch gekennzeichnet, daß der Anteil der (Komponente B) 10 bis 50 Gew.-%, bezogen auf das gesamte Bindemittel, beträgt.

5. Bindemittel nach einem der Ansprüche 1 bis 4, dadurch gekennzeichnet, daß sie mit einem teilblockierten Polyisocyanat, das im Durchschnitt eine freie Isocyanatgruppe pro Molekül besitzt und dessen blockierte Isocyanatgruppen bei Raumtemperatur beständig sind, umgesetzt worden sind.

6. Verfahren zur Herstellung von Bindemitteln für kationische Elektrotauchlacke auf der Basis von Umsetzungsprodukten von modifizierten Epoxidharzen und primären und/oder sekundären Aminen und/oder Ammoniumsalzen, die gegebenenfalls Vernetzungsmittel, Pigmente, Verlaufsmittel und andere übliche Hilfsmittel enthalten, dadurch gekennzeichnet, daß

A) Epoxidharze mit einem Molekulargewicht von mindestens 350 mit

B) elastifizierten Polyphenolen mit einem Molekulargewicht über 350, die der folgenden allgemeinen Formel entsprechen

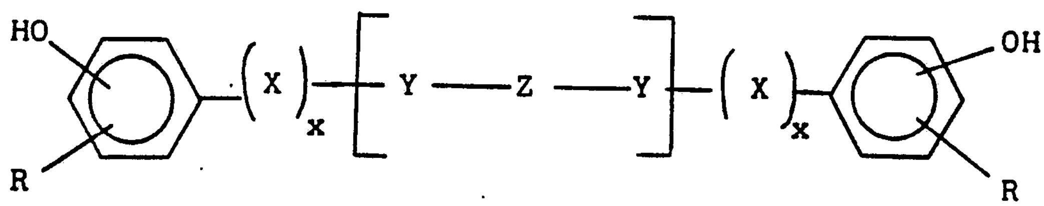

in der bedeuten:

X = Alkylen, Arylen, Alkarylen
O, O-Alkylen, O-Arylen, O-Alkarylen
S, S-Alkylen, S-Arylen, S-Alkarylen,
-CO-, CO-Alkylen, CO-Arylen, CO-Alkarylen
-$SO_2$-, $SO_2$-Alkylen, $SO_2$-Arylen, $SO_2$-Alkarylen
NH, NH-Alkylen, NH-Arylen, NH-Alkarylen

x = 0 oder 1

Y = X,

$$-\overset{O}{\overset{\|}{C}}-O-,\quad -\overset{H}{\overset{|}{C}}=N-,\quad -\overset{H}{\overset{|}{N}}-\overset{O}{\overset{\|}{C}}-$$

Z = Alkylen, Alkylen auf Basis von Polyestern, Polyethern, Polyamiden, Polycarbonaten, Polyurethanen

R = H, $CH_3$, Alkyl-, -O-$CH_3$, -O-Alkyl, -$NO_2$, - NR'$_2$, -NR'R'', -NHCOR''',

unter Addition an die Epoxidgruppen umgesetzt werden und das aus A) und B) erhaltene Reaktionsprodukt mit

C) primären und/oder sekundären Aminen und/oder Ammoniumsalzen zur Erzielung der erforderlichen Wasserdispergierbarkeit weiter umgesetzt wird.

7. Verfahren nach Anspruch 6, dadurch gekennzeichnet, daß als Komponente A) Epoxidharze auf Basis Bisphenol A verwendet werden.

8. Verfahren nach Anspruch 6, dadurch gekennzeichnet, daß als Epoxidharze Polyglycidylester verwendet werden.

9. Verfahren nach einem der Ansprüche 6 bis 8, dadurch gekennzeichnet, daß der Anteil der Komponente B) 10 - 50 Gew.-%, bezogen auf das gesamte Bindemittel, beträgt.

10. Verfahren nach einem der Ansprüche 6 bis 9, dadurch gekennzeichnet, daß das Reaktionsprodukt der Komponenten A), B) und C) mit einem teilblockierten Polyisocyanat, das im Durchschnitt eine freie Isocyanatgruppe pro Molekül besitzt und dessen blockierte Isocyanatgruppen bei Raumtemperatur beständig sind, umgesetzt wird.

11. Verwendung der Bindemittel nach Anspruch 1 bis 5 für Elektrotauchbäder.

12. Verfahren zum elektrophoretischen Beschichten eines elektritsch leitenden als Kathode geschalteten Substrats aus einem wässrigen Bad auf Basis mindestens teilweise mit Säuren neutralisierter kationischer Bindemittel, wobei die Bindemittel durch Umsetzung selbstvernetzbar gemacht worden sind oder das Bad ein zusätzliches Vernetzungsmittel enthält, dadurch gekennzeichnet, daß die Bindemittel hergestellt worden sind durch Reaktion von

A) Epoxidharzen mit einem Molekulargewicht von mindestens 350 mit

B) elastifizierten Polyphenolen mit einem Molekulargewicht über 350, die der folgenden allgemeinen Formel entsprechen

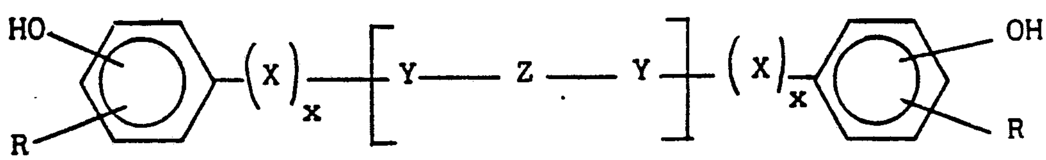

in der bedeuten:

X = Alkylen, Arylen, Alkarylen
O, O-Alkylen, O-Arylen, O-Alkarylen
S, S-Alkylen, S-Arylen, S-Alkarylen
-CO-, CO-Alkylen, CO-Arylen, CO-Alkarylen
-$SO_2$-, $SO_2$-Alkylen, $SO_2$-Arylen, $SO_2$-Alkarylen
NH, NH-Alkylen, NH-Arylen, NH-Alkarylen

x = 0 oder 1

Y = X,

$$-\overset{O}{\overset{\|}{C}}-O-,\quad -\overset{H}{\overset{|}{C}}=N-,\quad -\overset{H}{\overset{|}{N}}-\overset{O}{\overset{\|}{C}}-$$

Z = Alkylen, Alkylen auf Basis von Polyestern, Polyethern, Polyamiden, Polycarbonaten, Polyurethanen

R = H, $CH_3$, Alkyl, -O-$CH_3$, -O-Alkyl, -$NO_2$, -NR'$_2$, -NR'R'', -NHCOR''',

unter Addition an die Epoxidgruppen und weitere Umsetzung des Reaktionsproduktes aus A) und B) mit

C) primären und/oder sekundären Aminen oder Ammoniumsalzen zur Erzielung der erforderlichen

Wasserdispergierbarkeit.

13. Verfahren nach Anspruch 12, dadurch gekennzeichnet, daß die Komponente A) ein Epoxidharz auf Basis Bisphenol A ist.

14. Verfahren nach Anspruch 12, dadurch gekennzeichnet, daß die Komponente A) ein Polyglycidylester ist.

15. Verfahren nach einem der Ansprüche 12 bis 14, dadurch gekennzeichnet, daß der Anteil der (Komponente B) 10 bis 50 Gew.-%, bezogen auf das gesamte Bindemittel, beträgt.

## Claims

1. Water-dispersible binders for cationic electro-coating paints based on modified epoxy resins, characterized in that they have been prepared by reacting

A) epoxy resins of a molecular weight of at least 350 with

B) elastified polyphenols of a molecular weight greater than 350 which correspond to the following general formula

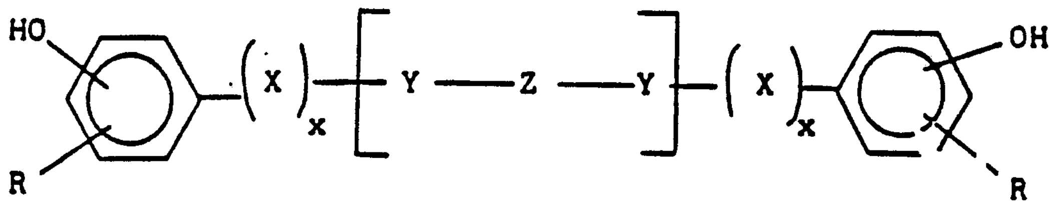

X = alkylene, arylene, alkarylene
O, O-alkylene, O-arylene, O-alkarylene
S, S-alkylene, S-arylene, S-alkarylene,
CO, CO-alkylene, CO-arylene, CO-alkarylene
$SO_2$, $SO_2$-alkylene, $SO_2$-arylene, $SO_2$-alkarylene
NH, NH-alkylene, NN-arylene, NH-alkarylene

x = 0 or 1

Y = X,

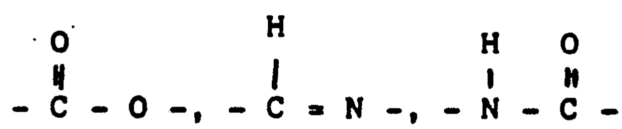

Z = alkylene, alkylene radicals of polyesters, polyethers, polyamides, polycarbonates and polyurethanes

R = H, $CH_3$, alkyl, -O-$CH_3$, -O-alkyl, -$NO_2$, -$NR'_2$, -NR'R'', -NHCOR''',

via addition to the epoxide groups, and by further reacting the reaction product from A) and B) with

C) primary and/or secondary amines or ammonium salts to achieve the required water dispersibility.

2. Binders according to claim 1, characterized in that the component A is an epoxy resin based on bisphenol A.

3. Binders according to claim 1, characterized in that the component A is a polyglycidyl ester.

4. Binders according to one of Claims 1 to 3, characterized in that the proportion of the component B) is 10 to 50 % by weight, based on the total binder.

5. Binders according to one of Claims 1 to 4, characterized in that they are reacted with a partly blocked polyisocyanate which possesses on average one free isocyanate group per molecule and whose blocked isocyanate groups are non-reactive at room temperature.

6. Process for the preparation of binders for cationic electro-coating paints based on reaction products of modified epoxy resins with primary and/or secondary amines and/or ammonium salts, which contain, where appropriate, cross-linking agents, pigments, flow-out agents and other customary auxiliary agents, characterized in that

A) epoxy resins of a molecular weight of at least 350 are reacted with

B) elastified polyphenols of a molecular weight greater than 350 which correspond to the following general formula

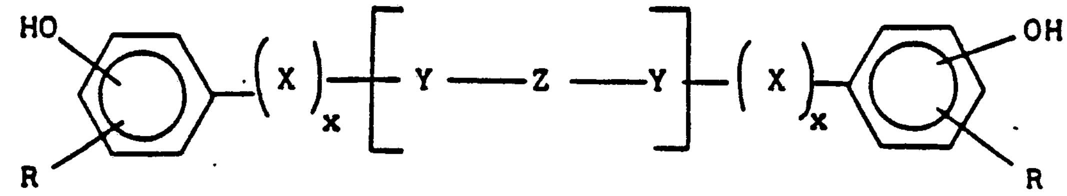

in which

X = alkylene, arylene, alkarylene
O, O-alkylene, O-arylene, O-alkarylene
S, S-alkylene, S-arylene, S-alkarylene,
-CO-, CO-alkylene, CO-arylene, CO-alkarylene
$-SO_2-$, $SO_2$-alkylene, $SO_2$-arylene, $SO_2$-alkarylene
NH, NH-alkylene, NH-arylene, NH-alkarylene

x = 0 or 1

Y = X,

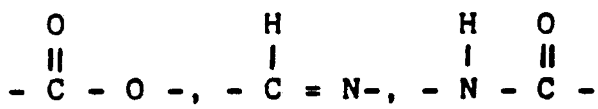

Z = alkylene, alkylene radicals of polyesters, polyethers, polyamides, polycarbonates and polyurethanes

R = H, $CH_3$, alkyl-, $-O-CH_3$, -O-alkyl, $NO_2$, $-NR'_2$, -NR'R'', -NHCOR''',

via addition to the epoxide groups, and by further reacting the reaction product obtained from A) and B) with
C) primary and/or secondary amines and/or ammonium salts to achieve the required water dispersibility.

7. Process according to Claim 6, characterized in that epoxy resins based on bisphenol A are used as component A).

8. Process according to Claim 6, characterized in that polyglycidyl esters are used as epoxy resins.

9. Process according to one of Claims 6 to 8, characterized in that the proportion of the component B) is 10 - 50 % by weight, based on the total binder.

10. Process according to one of Claims 6 to 9, characterized in that the reaction product of the components A), B) and C) is reacted with a partly blocked polyisocyanate which possesses on average one free isocyanate group per molecule and whose blocked isocyanate groups are non-reactive at room temperature.

11. Use of the binders according to Claims 1 to 5 for electro-coating baths.

12. Process for electrophoretic coating of an electrically conducting substrate connected as cathode from an aqueous bath, based on cationic binders at least partly neutralized with acids, in which the binders have been made self-cross-linking by reaction or the bath contains an additional cross-linking agent, characterized in that the binder is prepared by reacting
A) epoxy resins of a molecular weight of at least 350 with
B) elastified polyphenols of a molecular weight greater than 350, which correspond to the following general formula

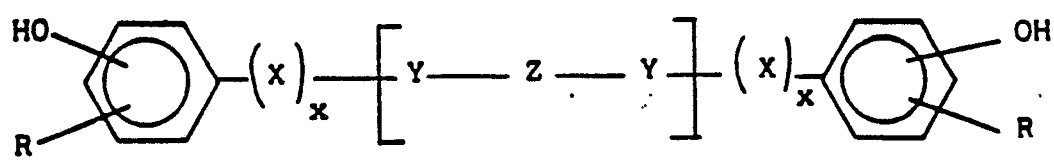

in which

X = alkylene, arylene, alkarylene
O, O-alkylene, O-arylene, O-alkarylene
S, S-alkylene, S-arylene, S-alkarylene,
-CO-, CO-alkylene, CO-arylene, CO-alkarylene
$-SO_2$, $SO_2$-alkylene, $SO_2$-arylene, $SO_2$-alkarylene
NH, NH-alkylene, NH-arylene, NH-alkarylene

x = 0 or 1

Y = X,

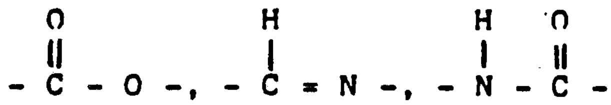

Z = alkylene, alkylene radicals of polyesters, polyethers, polyamides, polycarbonates and polyurethanes

R = H, $CH_3$, alkyl, -O-$CH_3$, -O-alkyl, -$NO_2$, -$NR'_2$, -NR'R'', -NHCOR''',

via addition to the epoxide groups, and by further reacting the reaction product from A) and B) with

C) primary and/or secondary amines or ammonium salts to achieve the required water dispersibility.

13. Process according to Claim 12, characterized in that the component A) is an epoxy resin based on bisphenol A.

14. Process according to Claim 12, characterized in that the component A) is a polyglycidyl ester.

15. Process according to one of claims 12 to 14, characterized in that the proportion of the component B) is 10 to 50 % by weight, based on the total binder.

**Revendications**

1. Liants dispersibles dans l'eau pour vernis d'électrodéposition cationiques, à base de résines époxydiques modifiées, caractérisés par le fait qu'ils ont été fabriqués par réaction de:

A) résines époxydiques présentant une masse moléculaire d'au moins 350, avec

B) des polyphénols rendus élastiques, présentant une masse moléculaire dépassant 350, qui correspondent à la formule générale suivante:

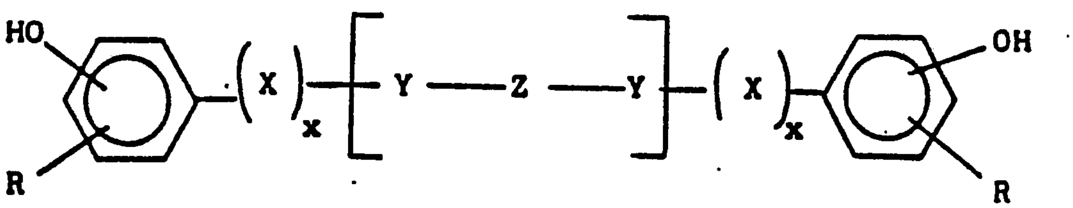

X = alkylène, arylène, alkarylène,
O, O-alkylène, O-arylène, O-alkarylène,
S, S-alkylène, S-arylène, S-alkarylène,
CO, CO-alkylène, CO-arylène, CO-alkarylène,
$SO_2$, $SO_2$-alkylène, $SO_2$-arylène, $SO_2$-alkarylène,
NH, NH-alkylène, NH-arylène, NH-alkarylène;

x = 0 ou 1;

Y = X,

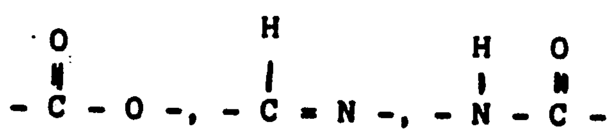

Z = alkylène, reste alkylène de polyesters, polyéthers, polyamides, polycarbonates, polyuréthannes;

R = H, $CH_3$, alkyle-, -O-$CH_3$, -O-alkyle, -$NO_2$, -$NR'_2$, -NR'R'', -NHCOR''';

avec addition sur les groupes époxy, et par réaction ultérieure du produit de réaction de A) et B) avec

C) des amines ou sels d'ammonium primaires et/ou secondaires, en vue de l'obtention de la dispersibilité dans l'eau nécessaire.

2. Liants selon la revendication 1, caractérisés par le fait que le composant A est une résine époxydique à basede bisphénol A.

3. Liants selon la revendication 1, caractérisés parle fait que le composant A est un polyglycidylester.

4. Liants selon l'une des revendications 1 à 3, caractérisés par le fait que la fraction, constituée par le

composant B) s'éléve à 10 à 50 % en poids par rapport à la totalité du liant.

5. Liants selon l'une des revendications 1 à 4, caractérisés par le fait qu'ils ont réagi avec un polyisocyanate partiellement bloqué, qui possède, en moyenne, un groupe isocyanate libre par molécule et dont les groupes isocyanate bloqués sont stables à la température ambiante.

6. Procédé de fabrication de liants pour vernis d'électrodéposition cationiques, à base de produits de réaction de résines époxydiques modifiées et d'amines et/ou sels d'ammonium primaires et/ou secondaires, qui renferment, le cas échéant, des agents réticulants, des pigments, des agents favorisant l'écoulement et autres additifs usuels, caractérisé par le fait que l'on fait réagir:

A) des résines époxydiques présentant une masse moléculaire d'au moins 350, avec

B) des polyphénols rendus élastiques, présentant une masse moléculaire dépassant 350, qui correspondent à la formule générale suivante:

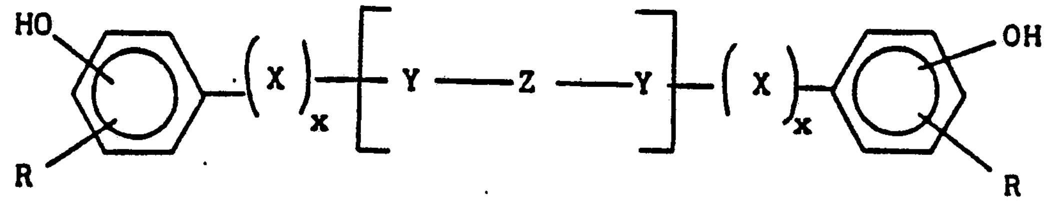

dans laquelle:

X = alkylène, arylène, alkarylène,
O, O-alkylène, O-arylène, O-alkarylène,
S, S-alkylène, S-arylène, S-alkarylène,
CO, CO-alkylène, CO-arylène, CO-alkarylène,
$SO_2$, $SO_2$-alkylène, $SO_2$-arylène, $SO_2$-alkarylène,
NH, NH-alkylène, NH-arylène, NH-alkarylène;

x = 0 ou 1;

Y = X,

$$-\overset{O}{\overset{\|}{C}}-O-,\quad -\overset{H}{\overset{|}{C}}=N-,\quad -\overset{H}{\overset{|}{N}}-\overset{O}{\overset{\|}{C}}-$$

Z = alkylène, reste alkylène de polyesters, polyéthers, polyamides, polycarbonates, polyuréthannes;

R = H, $CH_3$, alkyle-, -O-$CH_3$, -O-alkyle, -$NO_2$, -NR'$_2$, -NR'R'', -NHCOR''';

avec addition sur les groupes époxy, et que l'on fait réagir à nouveau le produit de réaction obtenu entre A) et B) avec

C) des amines et/ou sels d'ammonium primaires et/ou secondaires en vue de l'obtention de la dispersibilité dans l'eau nécessaire.

7. Procédé selon la revendication 6, caractérisé par le fait que l'on utilise, comme composent A), des résines époxydiques à base de bisphénol A.

8. Procédé selon la revendication 6, caractérisé par le fait que l'on utilise comme résines époxydiques, un polyglycidylester.

9. Procédé selon l'une des revendications 6 à 8, caractérisé par le fait que la fraction constituée par le composant B) s'élève à 10 - 50 % en poids par rapport à la totalité du liant.

10. Procédé selon l'une des revendications 6 à 9, caractérisé par le fait que l'on fait réagir le produit de réaction des composants A), B) et C) avec un polyisocyanate partiellement bloqué, qui possède, en moyenne, un groupe isocyanate libre par molécule et dont les groupes isocyanates bloqués sont stables à la température ambiante.

11. Utilisation des liants tels que définis à l'une des revendicatios 1 à 5 pour des bains d'électrodéposition.

12. Procédé pour le revêtement électrophorétique d'un substrat monté en cathode, électriquement conducteur, à partir d'un bain aqueux à base de liants cationiquues au moins partiellement neutralisés avec des acides, les liants ayant été rendus auto-réticulables par réaction ou bien le bain renfermant un agent de réticulation additionnel, caractérisé par le fait que les liants ont été préparés par réaction de:

A) résines époxydiques présentant une masse moléculaire d'au moins 350, avec

B) des polyphénols rendus élastiques, présentant une masse moléculaire dépassant 350, qui correspondent à la formule générale suivante:

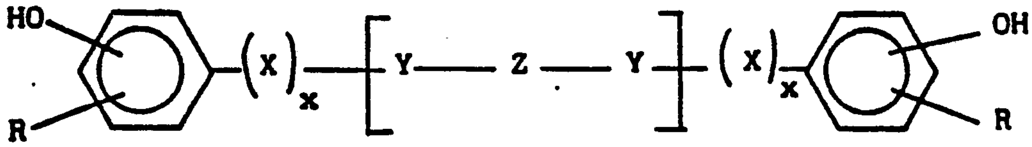

X = alkylène, arylène, alkarylène, O, O-alkylène, O-arylène, O-alkarylène, S, S-alkylène, S-arylène, S-alkarylène, -CO-, CO-alkylène, CO-arylène, CO-alkarylène, $-SO_2-$, $SO_2$-alkylène, $SO_2$-arylène, $SO_2$-alkarylène, NH, NH-alkylène, NH-arylène, NH-alkarylène;

x = 0 ou 1;

Y = X,

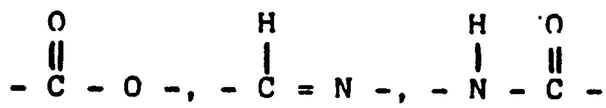

Z = alkylène, reste alkylène de polyesters, polyéthers, polyamides, polycarbonates, polyréthannes;

R = H, $CH_3$, alkyle-, $-O-CH_3$, -O-alkyle, $-NO_2$, $-NR'_2$, -NR'R'', -NHCOR''';

avec addition sur les groupes époxydes, et par réaction ultérieure du produit de réaction de A) et B) avec

C) des amines ou sels d'ammonium primaires et/ou secondaires, en vue de l'obtention de la dispersibilité dans l'eau nécessaire.

13. Procédé selon la revendication 12, caractérisé par le fait que le composant A) est une résine époxydique à base de bisphénol A.

14. Procédé selon la revendication 12, caractérisé par le fait que le composant A) est un polyglycidylester.

15. Procédé selon l'une des revendicationss 12 à 14, caractérisé par le fait que la fraction qui constitue le composant B) s'élève à 10 à 50 % en poids par rapport à la totalité du liant.